# EUROPÄISCHE PATENTSCHRIFT

(11) **EP 3 751 977 B1**
(45) Veröffentlichungstag und Bekanntmachung des Hinweises auf die Patenterteilung: **12.01.2022**
(21) Anmeldenummer: 19706254.0
(22) Anmeldetag: 11.02.2019
(51) Int. Cl.: A01B 79/00, G05D 1/02, A01B 69/04, A01D 34/00

(54) **AUTONOMES AGRARSYSTEM UND VERFAHREN ZUM BETREIBEN DES AGRARSYSTEMS**
AUTONOMOUS AGRICULTURAL SYSTEM AND METHOD FOR OPERATING THE AGRICULTURAL SYSTEM
SYSTÈME AGRICOLE AUTONOME ET PROCÉDÉ POUR FAIRE FONCTIONNER LE SYSTÈME AGRICOLE

(30) Priorität: 13.02.2018 DE 102018202154
(43) Veröffentlichungstag der Anmeldung: 23.12.2020
(73) Patentinhaber: Robert Bosch GmbH, 70442 Stuttgart (DE)
(72) Erfinder: LEIDENFROST, Roland, 71717 Beilstein (DE); GAESSLER, Gabriel, 71272 Renningen (DE); BALL, David Michael, 71272 Renningen (DE); MICHAELS, Andreas, 71106 Magstadt (DE); MUGELE, Tobias, 71277 Rutesheim (DE)
(86) Internationale Anmeldenummer: PCT/EP2019/053230
(87) Internationale Veröffentlichungsnummer: WO 2019/158452

(56) Entgegenhaltungen:
- WO-A1-2016/087535
- US-A1- 2016 307 448
- US-A1- 2017 357 262
- US-B2- 8 635 011

## Beschreibung

Die Erfindung betrifft ein Agrarsystem mit zumindest einer mobilen teil- oder vollautonom arbeitenden Arbeitsmaschine, mit einer Vorrichtung zum Vorgeben einer Grenze für einen zulässigen Arbeitsbereich der Arbeitsmaschine, mit einer Einrichtung zum Ermitteln einer relativen und/oder absoluten Position der Arbeitsmaschine, und mit einer der Arbeitsmaschine zugeordneten und ansteuerbaren Notabschaltung zum Deaktivieren der Arbeitsmaschine in Abhängigkeit von ihrer Position.

Weiterhin betrifft die Erfindung ein Verfahren zum Betreiben eines Agrarsystems, das zumindest eine mobile teil- oder vollautonom arbeitende Arbeitsmaschine aufweist, wobei durch das Vorgeben einer Grenze ein zulässiger Arbeitsbereich für die Arbeitsmaschine definiert wird, wobei eine relative und/oder absolute Position der Arbeitsmaschine überwacht und in Abhängigkeit von der Position der Arbeitsmaschine die Arbeitsmaschine deaktiviert wird.

### Stand der Technik

Agrarsysteme und Verfahren der eingangs genannten Art sind aus dem Stand der Technik bekannt. Autonom arbeitende mobile Arbeitsmaschinen in der Agrarwirtschaft erfordern eine Lösung zur Einhaltung der vorgegebenen Feldgrenzen, innerhalb welcher die Arbeitsmaschinen die für sie vorgesehene Tätigkeit ausüben. Diese Feldgrenzen werden heutzutage insbesondere durch satellitengestützte Navigationssysteme überwacht und durch eine entsprechende Ansteuerung der Arbeitsmaschinen eingehalten.

So offenbart beispielsweise die Offenlegungsschrift WO 2016/087535 A1 ein Agrarsystem, bei welchem die Position einer Arbeitsmaschine durch ein satellitengestütztes Navigationssystem überwacht wird. Falls die Arbeitsmaschine den zulässigen Arbeitsbereich verlässt oder eine Kommunikation mit der Arbeitsmaschine nicht mehr möglich ist, wird eine Notabschaltung getätigt und die Arbeitsmaschine deaktiviert.

Aus der Offenlegungsschrift US 8,635,011 B2 ist ein weiteres autonomes Arbeitssystem bekannt, bei welchem ein Alarmsignal ausgesendet wird, falls eine Arbeitsmaschine den vorgesehenen Arbeitsbereich verlässt.

Die US 2016/307448 A1 zeigt eine landwirtschaftliche Drohne, die bei einer Unterbrechung der Kommunikation mit einer Funkstation für mehr als 10 Sekunden zu ihrem Ausgangspunkt zurückkehrt und landet.

### Offenbarung der Erfindung

Das erfindungsgemäße Agrarsystem mit den Merkmalen des Anspruchs 1 hat den Vorteil, dass unabhängig von der eigentlichen Ortung und Ansteuerung der Arbeitsmaschine ein Notabschalten bei Verlassen des zulässigen Arbeitsbereichs erfolgt. Hierzu ist erfindungsgemäß ein zusätzliches Notabschaltsystem vorhanden, das eine Funkstation mit einer einstellbaren Funkreichweite, wobei die Funkstation zentral in dem Arbeitsbereich platzierbar/platziert ist, und ein an der Arbeitsmaschine angeordnetes Funkmodul, welches mit der Funkstation kommuniziert, aufweist, wobei das Funkmodul mit der Notabschaltung verbunden ist und die Notabschaltung ansteuert, wenn die Kommunikation zwischen dem Funkmodul und der Funkstation abbricht. Die Kommunikationsverbindung zwischen dem Funkmodul und der Funkstation ist somit separat von anderen Kommunikationsverbindungen des Agrarsystems vorhanden und dient allein dem Zweck, bei Bedarf die Arbeitsmaschine zu deaktivieren. Dadurch, dass die Funkstation eine einstellbare Funkreichweite aufweist, ist die Entfernung der Arbeitsmaschine zu der Funkstation durch die Funkreichweite vorgebbar. Im einfachsten Fall strahlt die Funkstation kreisförmig ein Kommunikationssignal aus, sodass durch die Funkreichweite ein Radius beziehungsweise ein Durchmesser einstellbar ist, innerhalb dessen die Arbeitsmaschine bewegbar ist, und außerhalb dessen die Arbeitsmaschine deaktiviert wird. Gemäß einer weiteren Ausführungsform ist die Funkstation dazu ausgebildet, in unterschiedliche Richtungen unterschiedliche Funksignale auszusenden, die von dem Funkmodul empfangen werden können, sodass die Arbeitsmaschine zusätzlich zu der Information der Entfernung zur Funkstation auch eine Information darüber erhält, in welchem Segment des Arbeitsbereichs sie sich befindet. In diesem Fall ist das Notabschaltsystem insbesondere dazu ausgebildet, dass die Funkstation je nach Arbeitssegment unterschiedliche Funkeichweiten einstellen kann oder einstellt, um beispielsweise den Arbeitsbereich der Arbeitsmaschine an eine komplizierte Feldgrenze, die nicht kreisförmig ist, anzupassen. Gemäß einer alternativen Ausführungsform ist die Funkstation der Arbeitsmaschine und das Funkmodul dem Arbeitsbereich zugeordnet.

Gemäß einer bevorzugten Ausführungsform der Erfindung ist die Funkreichweite in Abhängigkeit des Abstands der Grenze zu der Funkstation einstellbar oder eingestellt. Hierdurch sichergestellt, dass die Arbeitsmaschine innerhalb des zulässigen Bereichs einwandfrei arbeiten kann.

Weiterhin ist bevorzugt vorgesehen, dass die Funkstation dazu ausgebildet ist, in Abhängigkeit von der Grenze die Funkreichweite automatisch einzustellen. Dies ist beispielsweise dadurch erreichbar, dass die Funkstation mit der Vorrichtung zum Vorgeben der Grenze beziehungsweise des zulässigen Arbeitsbereichs kommuniziert und gegebenenfalls ihre Position in dem zulässigen Arbeitsbereich insbesondere mithilfe eines satellitengestützten Navigationssystems oder Ortungssystems feststellt, um dann die Funkreichweite festzulegen. Zweckmäßigerweise ist die Funkreichweite mindestens so groß wie die Entfernung der Funkstation zur Grenze, vorzugsweise etwas größer, um eine unerwünschte Deaktivierung der Arbeitsmaschine zu vermeiden.

Gemäß einer bevorzugten Weiterbildung der Erfindung ist vorgesehen, dass die Einrichtung zumindest ein satellitengestütztes Navigationssystem, ein Mobilfunksystem, ein funkbasiertes Ortungssystem, ein optisches Ortungssystem und/oder ein Abstandsmesssystem aufweist. Durch die zuvor genannten Systeme ist eine einfache Ortung beziehungsweise Feststellen der Position der Arbeitsmaschine, insbesondere innerhalb des Arbeitsbereichs, durchführbar. Durch eine Kombination der genannten Systeme ist darüber hinaus erreichbar, dass die von einem System festgestellte Position durch ein anderes System plausibilisierbar ist. Hierdurch ist eine besonders genau und verlässliche Positionsbestimmung der Arbeitsmaschine und damit eine besonders präzise Ansteuerung der Arbeitsmaschine gewährleistet.

Weiterhin ist bevorzugt vorgesehen, dass die Vorrichtung eine natürliche Grenze, insbesondere Fluss, Graben, Hügel, Gewächs oder dergleichen aufweist. Die natürliche Grenze ist durch einfache Mittel, wie beispielsweise optische Umfeldsensorik, wie Kamerasysteme, und/oder durch Abstandsmesssysteme, die berührungsfrei arbeiten, insbesondere Lidar-Systeme, Radar-Systeme oder dergleichen, erfassbar. Die natürliche Grenze muss dabei nicht natürlich geschaffen sein, vielmehr kann sie auch vom Menschen geschaffen sein, beispielsweise durch das Graben eines Grabens oder das Aufschütten eines Hügels sowie das Pflanzen von Bäumen oder dergleichen.

Weiterhin ist bevorzugt vorgesehen, dass die Vorrichtung eine entlang der Grenze verlegbare/verlegte Stromleitung und/oder zumindest einen Magnetfeldstreifen aufweist, der entlang der Grenze verlegbar/verlegt ist. Hierdurch ist eine elektrische beziehungsweise elektromagnetische Vorgabe der Grenze und des Arbeitsbereichs in einfacher und kostengünstiger Art und Weise möglich. Zweckmäßigerweise ist die Arbeitsmaschine mit einer entsprechenden Sensorik ausgestattet, welche das von der Stromleitung und/oder dem Magnetfeldstreifen erzeugte Magnetfeld erfasst und als Grenze des zulässigen Arbeitsbereichs erkennt. Sollte sich die Arbeitsmaschine dennoch über die Grenze hinaus bewegen, erfolgt spätestens mit Verlust der Funkverbindung zwischen Funkstation und Funkmodul die Notabschaltung der Arbeitsmaschine.

Weiterhin ist bevorzugt vorgesehen, dass die Einrichtung zwei unabhängig voneinander arbeitende Ortungssysteme an der Arbeitsmaschine aufweist, und dass ein Steuergerät die von den Ortungssystemen bestimmten Positionen zur Plausibilisierung miteinander vergleicht. Hierdurch ist sichergestellt, dass sich die Arbeitsmaschine auf der für sie vorgesehenen Position und/oder auf dem für sie vorgesehenen Arbeitspfad befindet. Wird bei dem Vergleich der bestimmten Positionen festgestellt, dass diese nicht oder nicht ausreichend genug übereinstimmen, erfolgt bevorzugt eine Deaktivierung der Arbeitsmaschine. Dies erfolgt unabhängig von dem vorhandenen Notschaltsystem.

Vorzugsweise sind beide genannten Ortungssysteme als satellitengestützte Navigationssysteme ausgebildet, wobei beispielsweise die beiden Navigationssysteme mit unterschiedlichen Satelliten zusammenarbeiten, um die Funktion der Arbeitsmaschine festzustellen.

Weiterhin ist bevorzugt vorgesehen, dass das Mobilfunksystem dazu ausgebildet ist, mit Mobilfunkzellen unterschiedlicher Mobilfunkbetreiber zusammenzuarbeiten, um die Position der Arbeitsmaschine zu ermitteln. Dadurch ist losgelöst von einem satellitengestützten Navigationssystem die Positionsbestimmung der Arbeitsmaschine durchführbar. Durch das Berücksichtigen von Mobilfunkzellen unterschiedlicher Mobilfunkbetreiber wird die Genauigkeit der Positionsbestimmung erhöht. Alternativ kann die Position mithilfe des Mobilfunksystems auch durch eine einfache Triangulation mit Mobilfunkzellen nur eines Mobilfunkbetreibers erfolgen.

Das erfindungsgemäße Verfahren mit den Merkmalen des Anspruchs 10 zeichnet sich dadurch aus, dass zentral in dem Arbeitsbereich eine Funkstation platziert und eine Funkreichweite der Funkstation eingestellt wird, und dass die Arbeitsmaschine mittels eines Funkmoduls mit der Funkstation kommuniziert und deaktiviert wird, wenn die Kommunikation zwischen dem Funkmodul und der Funkstation abbricht. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen
Figur 1 ein vorteilhaftes Agrarsystem in einer vereinfachten perspektivischen Darstellung,
Figur 2 ein vorteilhaftes Verfahren zum Betreiben des Agrarsystems und
Figur 3 eine Variante des Agrarsystems in einer vereinfachten Darstellung.

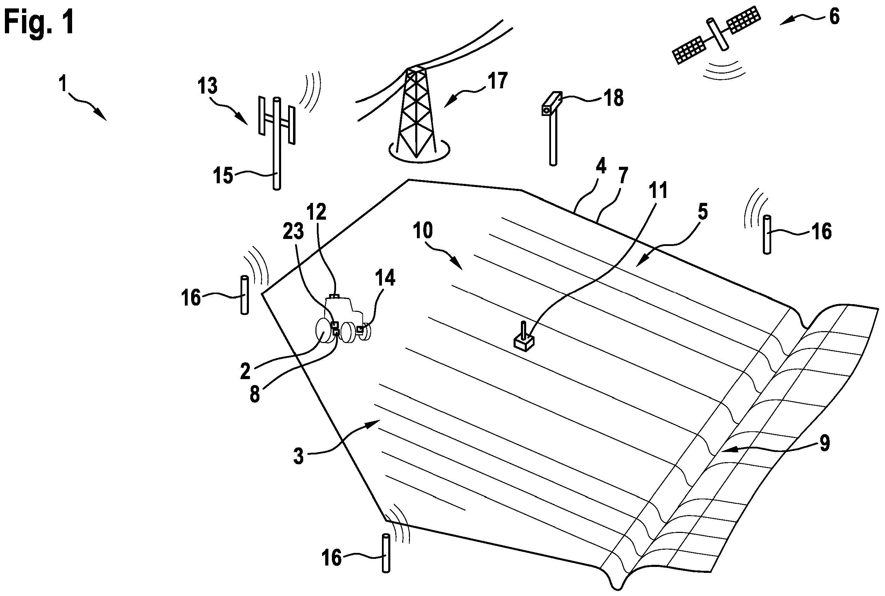

Figur 1 zeigt in einer perspektivischen Draufsicht ein Agrarsystem 1, das eine teil- oder vollautonom betriebene mobile Arbeitsmaschine 2 aufweist. Die Arbeitsmaschine 2 befindet sich auf einem Feld 3 und ist dazu ausgebildet, das Feld 3 zu bearbeiten, beispielsweise durch das Pflanzen von Samen, dem Ernten von Früchten, Unkrautentfernung und/oder andere Tätigkeiten. Hierzu weist die Arbeitsmaschine 2 eine entsprechende Arbeitseinrichtung auf, die sie mit sich führt. Die Arbeitsmaschine 2 ist beschleunigbar, bremsbar und lenkbar ausgebildet, wobei sämtliche Bewegungen der Arbeitsmaschine 2 bevorzugt autonom erfolgen, insbesondere in Abhängigkeit von der vorgegebenen Tätigkeit und einer vorgegebenen das Feld 3 umrandenden Grenze 4. Die Feldgrenze 4 ist ringförmig, nicht notwendigerweise kreisringförmig, wie in Figur 1 gezeigt, und begrenzt einen zulässigen Arbeitsbereich 5, innerhalb dessen die Arbeitsmaschine 2 ihre Tätigkeit ausführen soll.

Die Grenze 4 wird durch zumindest eine Vorrichtung vorgegeben, die unterschiedlich ausgeführt sein kann. Zum einen kann es sich bei der Grenze 4 um eine virtuelle Grenze handeln, die durch ein satellitengestütztes Navigationssystem 6 vorgegeben und überwacht wird. Zum anderen kann die Grenze 4 durch eine in den Boden eingelassenen Stromleitung 7 festgelegt sein, die, wenn sie mit einem Strom beaufschlagt wird, ein magnetisches Feld erzeugt, das von einer Sensorik 8 der Arbeitsmaschine 2 erfassbar ist. Auch kann es sich bei der Vorrichtung um einen Magnetstreifen oder um eine natürliche Grenze handeln, wie beispielsweise ein Graben 9, der am Rand des Feldes 3 ausgehoben wurde oder natürlicherweise dort bereits besteht. Die Sensorik 8 ist in diesem Fall dann dazu ausgebildet, insbesondere optisch und/oder mittels berührungsfrei arbeitender Abstandssensoren den Graben 9 zu erkennen und als Grenze 4 des Arbeitsbereichs 5 zu verstehen.

Das Navigationssystem 6 dient außerdem als Einrichtung zur Erfassung der Position der Arbeitsmaschine 2 auf dem Feld 3 beziehungsweise in dem Arbeitsbereich 5. Mithilfe der aktuellen Position und in Kenntnis der vorgegebenen Grenze 4 ist die Arbeitsmaschine 2 derart ansteuerbar, dass sie den vorgesehenen Arbeitsbereich 5 nicht verlässt. Um zu vermeiden, dass bei einem Fehlerfall die Arbeitsmaschine 2 über die Grenze 4 hinausfährt und den Arbeitsbereich 5 dennoch verlässt, ist vorteilhafterweise ein Notabschaltsystem 10 vorhanden.

Das Notabschaltsystem 10 weist eine Funkstation 11 auf, die zentral beziehungsweise mittig im Arbeitsbereich 5 angeordnet ist. Weiterhin weist das Notabschaltsystem 10 ein Funkmodul 12 auf, das an der Arbeitsmaschine 2 angeordnet ist und mit dieser mitgeführt wird. Solange zwischen dem Funkmodul 12 und der Funkstation 11 ein Funkkontakt besteht oder eine Funk-Kommunikation stattfindet, ist der Betrieb der Arbeitsmaschine 2 zugelassen. Bricht die Kommunikation ab, so wird der Betrieb unterbrochen indem eine Notabschaltung 23 der Arbeitsmaschine 2 angesteuert und damit die Arbeitsmaschine 2 deaktiviert wird. Die Funkreichweite der Funkstation 11 ist einstellbar und wird bevorzugt in Abhängigkeit von der Größe des Arbeitsfeldes 5 beziehungsweise dem Verlauf der Grenze 4 derart vorgegeben, dass die Kommunikation zwischen der Arbeitsmaschine 2 und der Funkstation 11 innerhalb des Bereichs 5 gewährleistet ist.

Hierdurch ergibt sich, dass dann, wenn die Arbeitsmaschine 2 das Arbeitsfeld 5 verlassen sollte, beispielsweise über die Kommunikation zu dem Navigationssystem 6 abgebrochen ist und eine Positionsbestimmung der Arbeitsmaschine 2 nicht sicher oder falsch erfolgt, die Arbeitsmaschine 2 deaktiviert wird, sobald sie sich außerhalb des Arbeitsbereichs 5 oder ausreichend weit außerhalb des Arbeitsbereichs 5 befindet. Hierdurch ist einerseits die Betriebssicherheit des Agrarsystems 1 erhöht und andererseits auch eine Diebstahlsicherheit geboten.

Während im vorliegenden Ausführungsbeispiel die Funkstation 11 in dem Arbeitsbereich 5 auf dem Feld 3 angeordnet ist, und das Funkmodul 12 an der Antriebsmaschine 2, kann diese Anordnung selbstverständlich auch umgekehrt werden.

Vorzugsweise ist die Funkstation 11 dazu ausgebildet, automatisch in Abhängigkeit von der Größe des Arbeitsbereichs 5 die zulässige Funkreichweite automatisch einzustellen. Dazu ist die Funkstation 11 beispielsweise in das Betriebssystem des Agrarsystems 1 eingebunden, durch welches die Antriebsmaschine 2 angesteuert wird, und welchem die Grenze 4 bekannt ist. Optional ist die Funkstation 11 außerdem mit einem Navigationsmodul oder Ortungsmodul ausgestattet, das mit dem Satellitensystem 6 zusammenwirkt, um die Position der Funkstation 11 in dem Arbeitsbereich 5 beziehungsweise dem Feld 3 zu ermitteln und davon ausgehend, den Abstand zur Grenze 4 und damit die erlaubte Funkreichweite festzulegen.

Zusätzlich oder alternativ zu dem Navigationssystem 6 zur Bestimmung der Position der Arbeitsmaschine 2 und gegebenenfalls auch der Funkstation 11 weist das Agrarsystem 1 vorteilhafterweise ein Ortungssystem 13 auf, das eine Ortung der Arbeitsmaschine 2 mithilfe von Mobilfunk erlaubt. Dazu weist die Arbeitsmaschine 2 bevorzugt ein Mobilfunkempfänger 14 auf, der dazu ausgebildet ist, mit Mobilfunkzellen 15 insbesondere unterschiedliche Mobilfunkanbieter zusammenzuwirken, um per Triangulation die Position der Arbeitsmaschine 2 zu bestimmen.

Zusätzlich oder alternativ werden an der Grenze 4 verteilt mehrere Funksender 16, die per Triangulation die Arbeitsmaschine 2 in dem Arbeitsbereich 5 verorten. Zweckmäßigerweise sind mindestens drei der Funksender 16 vorhanden. Die Arbeitsmaschine 2 weist ein entsprechendes Empfangsmodul auf, um die Signale der Funksender zu ermitteln und daraus per Triangulation seine Position auf dem Feld 3 zu bestimmen. Bei den Funksendern 16 kann es sich beispielsweise um Mobilfunksender oder WLAN-Sender oder dergleichen handeln.

Anstelle eines Grabens 9 können auch andere Landschaftsmerkmale, wie beispielsweise Farbmarkierungen, Gebäude, Hügel oder dergleichen als optische Merkmale zur Bestimmung der Grenze 4 genutzt werden beziehungsweise dienen. Auch ist es denkbar, durch Auswertung der erforderlichen Antriebs-Schlupfleistung der Antriebsmaschine 2 zu ermitteln, ob sie sich in einem Grenzbereich befindet, der beispielsweise durch eine Steigung (positiv oder negativ) gekennzeichnet ist. Auch Gebäude oder andere herausstechende Landschaftsmerkmale, wie beispielsweise Strommasten 17 können zur optischen Orientierung und Positionsbestimmung der Antriebsmaschine 2 dienen.

Zusätzlich oder alternativ können auch fest installierte optische Systeme, beispielsweise Kameraeinheiten 18 dem Arbeitsbereich 5 zugeordnet sein, um durch optische Beobachtung des Arbeitsbereich 5 die Position der darin befindlichen Arbeitsmaschine 2 zu ermitteln.

Durch die verschiedenen Positionsbestimmungsmöglichkeiten ist ein sicherer Betrieb der Arbeitsmaschine 2 innerhalb des Arbeitsbereichs 5 gewährleistet. Darüber hinaus ist grundsätzlich auch verhindert, dass die Arbeitsmaschine 2 den Arbeitsbereich 5 unerwünscht verlässt. Sollte aufgrund eines Fehlers bei der Positionsbestimmung dennoch die Arbeitsmaschine 2 den Arbeitsbereich 5 verlassen, so führt das Notabschaltsystem 1 zu einer Deaktivierung der Arbeitsmaschine 2, sobald diese sich außerhalb der Reichweite der Funksignale des Notabschaltungssystems 1 befindet.

Durch die Notabschaltung wird zumindest der Antrieb der Antriebsmaschine 2 deaktiviert, sodass eine Weiterbewegung der Arbeitsmaschine 2 verhindert ist. Optional werden auch die Arbeitseinrichtungen der Arbeitsmaschine 2 deaktiviert und bevorzugt die letzte bekannte Position an einen Nutzer des Agrarsystems 1 übermittelt, sodass er die Arbeitsmaschine 2 einfach auffinden kann, auch wenn diese den Arbeitsbereich 5 verlassen hat.

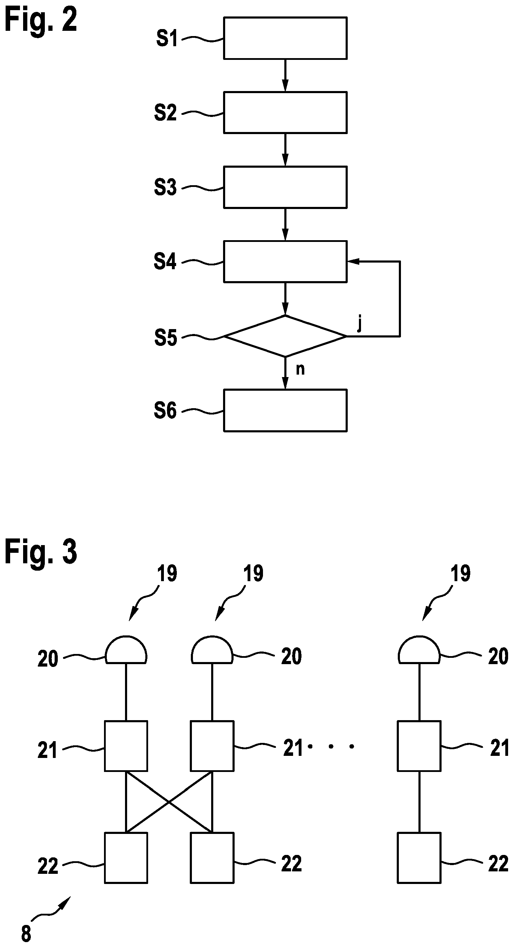

Figur 2 fasst das vorteilhafte Verfahren zum Betreiben des Agrarsystems 1 in einem Flussdiagramm zusammen:
In einem ersten Schritt S1 wird das Agrarsystem 1 in Betrieb genommen. In einem Schritt S2 wird der Arbeitsbereich 5, innerhalb dessen die Arbeitsmaschine 2 ihre Arbeit verrichten soll, definiert. Dabei wird der Arbeitsbereich 5 insbesondere durch die zuvor genannten Positionsbestimmungssysteme und/oder Einrichtungen überwacht und festgelegt.

Im darauffolgenden Schritt S3 wird die Funkreichweite der Funkstation 11 in Abhängigkeit von der festgelegten Grenze 4 eingestellt, so dass die Arbeitsmaschine 2 innerhalb des Arbeitsbereichs 5 ihre Arbeit sicher verrichtet, jedoch bei Verlassen des Arbeitsbereichs 5 notabgeschaltet wird.

In einem darauffolgenden Schritt S4 wird der Arbeitsbetrieb aufgenommen und in einem Schritt S5 laufend die Position der Arbeitsmaschine 2 erfasst, wobei dabei insbesondere das Erfassen des Funksignals der Funkstation 11 geprüft wird. Solang das Funksignal 11 erfasst wird (j), wird das Verfahren in Schritt S4 weitergeführt, bis die Bearbeitung des Arbeitsbereichs 5 beziehungsweise des Feldes 3 innerhalb des Arbeitsbereichs 5 abgeschlossen ist.

Wird jedoch der Funkkontakt unterbrochen, weil sich die Arbeitsmaschine 2 außerhalb der eingestellten Funkreichweite bewegt (n), so wird in einem darauffolgenden Schritt S6 die Arbeitsmaschine, zumindest deren Antriebseinrichtung, deaktiviert.

Figur 3 zeigt eine vorteilhafte Ausbildung der Sensorik 8 der Antriebsmaschine 2 in einer vereinfachten Darstellung. Dazu weist die Sensorik 8 mehrere Sensoreinheiten 19 auf, die jeweils für sich dazu ausgebildet sind, die Position der Antriebsmaschine 2 zu erfassen. Jede Sensoreinheit weist dazu ein Sensorelement 20, wie beispielsweise eine Antenne, auf, ein Empfangsmodul 21 zum Auswerten der von der Antenne empfangenen Signale sowie eine Recheneinheit 22, insbesondere Mikroprozessor oder mobiler Rechner, der die Signale auswertet, um die Position der Antriebsmaschine 2 zu bestimmen. Eine Sensoreinheit 19 empfängt dazu beispielsweise die Signale eines ersten Ortungssystems, wie beispielsweise des satellitengestützten Navigationssystems 6, während die zweite Sensoreinheit 19 zweite Signale des satellitengestützten Navigationssystems 6 empfängt, jedoch mit dem Unterschied, dass unterschiedliche Satellitensignale ausgewertet werden. Dabei reicht es bereits aus, wenn die empfangenen Daten der einen Sensoreinheit 19 sich um Satellitensignal unterscheiden. Insbesondere empfängt eine Sensoreinheit 19 Satellitensignale über das Navigationssystem 6 und die andere Sensoreinheit 19 GNSS-Signale von GLONASS, also einem anderen satellitengestützten Navigationssystem.

Die von den Empfangsmodulen 21 empfangenen Signale werden jedoch nicht nur der jeweils zugehörigen Recheneinheit 22 zur Verfügung gestellt, sondern auch zumindest einer weiteren Recheneinheit der Sensorik 8, so dass diese auf Basis dieser Daten ebenfalls die Position der Antriebsmaschine 2 bestimmt. Durch einen Vergleich der so ermittelten Positionen ist die Positionsbestimmung plausibilisierbar und die Betriebssicherheit des Agrarsystems 1 erhöhbar. Weichen die ermittelten Positionen beispielsweise zu weit voneinander ab, insbesondere über einen vorgebbaren Grenzwert hinaus, so wird die Antriebsmaschine 2 vorzugsweise zur Sicherheit deaktiviert.

Das vorteilhafte Agrarsystem 1 kann beispielsweise für Feldroboter als Antriebsmaschinen bei der Bodenbearbeitung, zum Pflanzenschutz, insbesondere Gemüse-, Garten- und Ackerbau, verwendet beziehungsweise eingesetzt werden.

## Patentansprüche

1. Autonomes Agrarsystem (1), mit zumindest einer mobilen teil- oder vollautonom arbeitenden Antriebsmaschine (2), mit einer Vorrichtung zum Vorgeben einer Grenze (4) für einen zulässigen Arbeitsbereich (5) der Antriebsmaschine (2), mit einer Einrichtung zum Ermitteln einer relativen oder absoluten Position der Antriebsmaschine (2), und mit einer der Antriebsmaschine (2) zugeordneten und ansteuerbaren Notabschaltung (23) zum Deaktivieren der Arbeitsmaschine (2) in Abhängigkeit von ihrer Position, **gekennzeichnet durch** ein Notabschaltsystem (10), das eine Funkstation (11) mit einstellbarer Funkreichweite, wobei die Funkstation (11) zentral in dem Arbeitsbereich (5) platzierbar/platziert ist, und ein an der Arbeitsmaschine (2) angeordnetes Funkmodul (12), das mit der Funkstation (11) kommuniziert, aufweist, wobei das Funkmodul (12) mit der Notabschaltung (23) verbunden ist und die Notabschaltung (23) ansteuert, wenn die Kommunikation zwischen dem Funkmodul (12) und der Funkstation (11) abbricht.

2. Agrarsystem nach Anspruch 1, **dadurch gekennzeichnet, dass** die Funkreichweite in Abhängigkeit des Abstands der Grenze (4) zu der Funkstation (11) einstellbar oder eingestellt ist.

3. Agrarsystem nach einem der vorhergehenden Ansprüche, **dadurch gekennzeichnet, dass** die Funkstation (11) dazu ausgebildet ist, in Abhängigkeit von der Grenze (4) die Funkreichweite automatisch einzustellen.

4. Agrarsystem nach einem der vorhergehenden Ansprüche, **dadurch gekennzeichnet, dass** die Einrichtung zumindest einen satellitengestütztes Navigationssystem (6), ein Mobilfunksystem (13), ein funkbasiertes Ortungssystem, ein optisches Ortungssystem und/oder ein Abstandsmesssystem aufweist.

5. Agrarsystem nach einem der vorhergehenden Ansprüche, **dadurch gekennzeichnet, dass** die Vorrichtung eine natürliche Grenze, insbesondere Fluss, Graben (9), Hügel oder dergleichen aufweist.

6. Agrarsystem nach einem der vorhergehenden Ansprüche, **dadurch gekennzeichnet, dass** die Vorrichtung eine entlang der Grenze (4) verlegbare/verlegte Stromleitung (7) und/oder Magnetfeldstreifen aufweist.

7. Agrarsystem nach einem der vorhergehenden Ansprüche, **dadurch gekennzeichnet, dass** die Einrichtung zwei unabhängig voneinander arbeitende Ortungssysteme an der Antriebsmaschine (2) aufweist, und dass ein Steuergerät die von den Ortungssystemen bestimmten Positionen zur Plausibilisierung miteinander vergleicht.

8. Agrarsystem nach einem der vorhergehenden Ansprüche, **dadurch gekennzeichnet, dass** die beiden Ortungssysteme satellitengestützte Navigationssysteme (6) sind.

9. Agrarsystem nach einem der vorhergehenden Ansprüche, **dadurch gekennzeichnet, dass** das Mobilfunksystem (13) dazu ausgebildet ist, mit Mobilfunkzellen (15) unterschiedlicher Mobilfunkbetreiber zusammenzuarbeiten, um die Position der Antriebsmaschine (2) zu ermitteln.

10. Verfahren zum Betreiben eines Agrarsystems (1), das zumindest eine mobile teil- oder vollautonom arbeitende Arbeitsmaschine (2) aufweist, wobei der Arbeitsmaschine (2) eine Grenze für einen zulässigen Arbeitsbereich (5) vorgegeben wird, und eine relative und und/oder absolute Position der Arbeitsmaschine (2) überwacht und die Arbeitsmaschine in Abhängigkeit von der Position deaktiviert wird, **dadurch gekennzeichnet, dass** eine Funkstation (11) zentral in dem Arbeitsbereich (5) platziert wird und eine Funkreichweite der Funkstation (11) eingestellt wird, wobei die Arbeitsmaschine (2) mittels eines Funkmoduls (12) mit der Funkstation (11) kommuniziert und wobei die Arbeitsmaschine (2) deaktiviert wird, wenn die Kommunikation zwischen dem Funkmodul (12) und der Funkstation (11) abbricht.

## Claims

1. Autonomous agricultural system (1) having at least one mobile drive machine (2) operating in a partially or fully autonomous manner, having an apparatus for specifying a boundary (4) for a permissible working area (5) of the drive machine (2), having a device for determining a relative or absolute position of the drive machine (2), and having an actuatable emergency switch-off means (23) which is assigned to the drive machine (2) and is designed to deactivate the work machine (2) on the basis of its position, **characterized by** an emergency switch-off system (10) having a radio station (11) with an adjustable radio range, wherein the radio station (11) can be/is centrally placed in the working area (5), and a radio module (12) which is arranged on the work machine (2) and communicates with the radio station (11), wherein the radio module (12) is connected to the emergency switch-off means (23) and actuates the emergency switch-off means (23) if the communication between the radio module (12) and the radio station (11) breaks down.

2. Agricultural system according to Claim 1, **characterized in that** the radio range can be or is adjusted on the basis of the distance between the boundary (4) and the radio station (11).

3. Agricultural system according to one of the preceding claims, **characterized in that** the radio station (11) is designed to automatically adjust the radio range on the basis of the boundary (4).

4. Agricultural system according to one of the preceding claims, **characterized in that** the device has at least one satellite-based navigation system (6), a mobile radio system (13), a radio-based locating system, an optical locating system and/or a distance measuring system.

5. Agricultural system according to one of the preceding claims, **characterized in that** the apparatus has a natural boundary, in particular a river, a ditch (9), a hill or the like.

6. Agricultural system according to one of the preceding claims, **characterized in that** the apparatus has a power line (7) and/or magnetic field strips which can be/is/are laid along the boundary (4) .

7. Agricultural system according to one of the preceding claims, **characterized in that** the device has two locating systems which operate independently of one another on the drive machine (2), and **in that** a control device compares the positions determined by the locating systems with one another in order to check the plausibility.

8. Agricultural system according to one of the preceding claims, **characterized in that** the two locating systems are satellite-based navigation systems (6).

9. Agricultural system according to one of the preceding claims, **characterized in that** the mobile radio system (13) is designed to cooperate with mobile radio cells (15) of different mobile radio operators in order to determine the position of the drive machine (2).

10. Method for operating an agricultural system (1) having at least one mobile work machine (2) operating in a partially or fully autonomous manner, wherein a boundary for a permissible working area (5) is specified for the work machine (2), and a relative and/or absolute position of the work machine (2) is monitored and the work machine is deactivated on the basis of the position, **characterized in that** a radio station (11) is centrally placed in the working area (5) and a radio range of the radio station (11) is adjusted, wherein the work machine (2) communicates with the radio station (11) by means of a radio module (12), and wherein the work machine (2) is deactivated if the communication between the radio module (12) and the radio station (11) breaks down.

## Revendications

1. Système agricole autonome (1), comprenant au moins une machine d'entraînement (2) mobile fonctionnant de manière partiellement ou entièrement autonome, un dispositif pour spécifier une limite (4) pour une zone de travail admissible (5) de la machine d'entraînement (2), un équipement pour déterminer une position relative ou absolue de la machine d'entraînement (2), et un circuit d'arrêt d'urgence (23) associé à la machine d'entraînement (2) et pouvant être piloté pour désactiver la machine de travail (2) en fonction de sa position,
**caractérisé par** un système d'arrêt d'urgence (10) qui présente une station radio (11) à portée radio réglable, la station radio (11) pouvant être ou étant placée de manière centrale dans la zone de travail (5), et un module radio (12) disposé sur la machine de travail (2) qui communique avec la station radio (11), le module radio (12) étant relié au circuit d'arrêt d'urgence (23) et pilotant le circuit d'arrêt d'urgence (23) lorsque la communication entre le module radio (12) et la station radio (11) est perdue.

2. Système agricole selon la revendication 1, **caractérisé en ce que** la portée radio est réglable ou est réglée en fonction de la distance de la limite (4) par rapport à la station radio (11).

3. Système agricole selon l'une quelconque des revendications précédentes, **caractérisé en ce que** la station radio (11) est réalisée pour régler la portée radio automatiquement en fonction de la limite (4).

4. Système agricole selon l'une quelconque des revendications précédentes, **caractérisé en ce que** l'équipement présente au moins un système de navigation par satellite (6), un système de radiocommunication mobile (13), un système de localisation par radio, un système de localisation optique et/ou un système de mesure de distance.

5. Système agricole selon l'une quelconque des revendications précédentes, **caractérisé en ce que** le dispositif présente une limite naturelle, en particulier une rivière, un fossé (9), une colline ou similaires.

6. Système agricole selon l'une quelconque des revendications précédentes, **caractérisé en ce que** le dispositif présente une ligne électrique (7) et/ou une bande magnétique pouvant être ou étant posée(s) le long de la limite (4).

7. Système agricole selon l'une quelconque des revendications précédentes, **caractérisé en ce que** l'équipement présente deux systèmes de localisation fonctionnant indépendamment l'un de l'autre sur la machine d'entraînement (2), et **en ce qu'**un appareil de commande compare les positions déterminées par les systèmes de localisation pour un contrôle de plausibilité.

8. Système agricole selon l'une quelconque des revendications précédentes, **caractérisé en ce que** les deux systèmes de localisation sont des systèmes de navigation par satellite (6).

9. Système agricole selon l'une quelconque des revendications précédentes, **caractérisé en ce que** le système de radiocommunication mobile (13) est réalisé pour coopérer avec des cellules de radiocommunication mobile (15) de différents opérateurs de radiocommunication mobile afin de déterminer la position de la machine d'entraînement (2).

10. Procédé permettant de faire fonctionner un système agricole (1) qui présente au moins une machine de travail (2) mobile fonctionnant de manière partiellement ou entièrement autonome, une limite pour une zone de travail admissible (5) étant spécifiée pour la machine de travail (2), et une position relative et/ou absolue de la machine de travail (2) étant surveillée (s), et la machine de travail étant désactivée en fonction de la position,
**caractérisé en ce qu'**une station radio (11) est placée de manière centrale dans la zone de travail (5) et une portée radio de la station radio (11) est réglée, la machine de travail (2) communiquant avec la station radio (11) au moyen d'un module radio (12), et la machine de travail (2) étant désactivée lorsque la communication entre le module radio (12) et la station radio (11) est perdue.
